# EUROPEAN PATENT SPECIFICATION

(11) **EP 2 863 334 B1**
(45) Date of publication and mention of the grant of the patent: **07.09.2016**
(21) Application number: 14189072.3
(22) Date of filing: 15.10.2014
(51) Int. Cl.: H04L 29/06, G06F 21/74, G06F 21/53, G06F 21/62

(54) **Processing system with virtual clients and methods for use therewith**
Verarbeitungssystem mit virtuellen Clients und Verfahren zur Verwendung davon
Système de traitement avec des clients virtuels et procédés d'utilisation associés

(30) Priority: 18.10.2013 US 201361893116 P; 25.06.2014 US 201414314691
(43) Date of publication of application: 22.04.2015
(73) Proprietor: ViXS Systems Inc., Toronto, ON M2K 1E3 (CA)
(72) Inventor: Stewart, Norman Vernon Douglas, Toronto, Ontario M4J 4J9 (CA); Lee, Brian, Thornhill, Ontario L3T 3W7 (CA)
(74) Representative: Benson, Christopher

(56) References cited:
- EP-A1- 2 447 879
- EP-A2- 2 161 671

## Description

### TECHNICAL FIELD OF THE DISCLOSURE

The present disclosure relates to security in processing devices.

### DESCRIPTION OF RELATED ART

Processing systems can include operating system programs that allow utilities and application programs to be written for a common computing environment, even when executed on different processing platforms. Operating systems also provide for multitasking that allows the simultaneous execution of multiple applications and utilities, etc. Examples of such operating systems include Microsoft Windows, Mac OS, Linux and Solaris. The flexibility of these operating systems provides several drawbacks. For instance, authors of malicious code such as viruses, worms, Trojan horses and other harmful code have taken advantage of the open nature of operating systems such as Microsoft windows.

Processing systems typically include memory registers for facilitating the communication of data between devices of the systems. Memory registers are one point of vulnerability for malicious code. In addition, improper access to memory registers during the processing video applications can provide an authorized access to media content in an unprotected format.

EP 2 447 879 discloses a memory mobile including a register space having a plurality of registers and secure access data corresponding to the register space.

EP 2 161 671 discloses a memory storing cryptographic keys in a privileged memory section and further storing a rule set. Upon an access request to a cryptographic key by an operating system function, a memory arbitration module accesses the rule set to determine when the operating system process is trusted and the request can be granted.

### BRIEF DESCRIPTION OF THE SEVERAL VIEWS OF THE DRAWINGS

FIG. 1 presents a pictorial representation of example devices 11-16 that can include a processing system 100 in accordance with an embodiment of the present disclosure.
FIG. 2 presents a block diagram representation of a processing system 100 in accordance with an embodiment of the present disclosure.
FIG. 3 presents a block diagram representation of a register space 144 in accordance with a further embodiment of the present disclosure.
FIG. 4 presents a block diagram representation of a register in accordance with a further embodiment of the present disclosure.
FIG. 5 presents a block diagram representation of a memory space 142 in accordance with a further embodiment of the present disclosure.
FIG. 6 presents a block diagram representation of an operating system 190 in accordance with a further embodiment of the present disclosure.
FIG. 7 presents a block diagram representation of secure access data 146 in accordance with a further embodiment of the present disclosure.
FIG. 8 presents a block diagram representation of a video encoding system 200 in accordance with an embodiment of the present disclosure.
FIG. 9 presents a block diagram representation of a video decoding system 202 in accordance with an embodiment of the present disclosure.
FIG. 10 presents a block diagram representation of a video transcoding system 204 in accordance with an embodiment of the present disclosure.
FIG. 11 presents a block diagram representation of a video distribution system 175 in accordance with an embodiment of the present disclosure.
FIG. 12 presents a block diagram representation of a video storage system 179 in accordance with an embodiment of the present disclosure.
FIG. 13 presents a flowchart representation of a method in accordance with an embodiment of the present disclosure.
FIG. 14 presents a flowchart representation of a method in accordance with an embodiment of the present disclosure.
FIG. 15 presents a flowchart representation of a method in accordance with an embodiment of the present disclosure.

### DETAILED DESCRIPTION OF THE DISCLOSURE INCLUDING THE PRESENTLY PREFERRED EMBODIMENTS

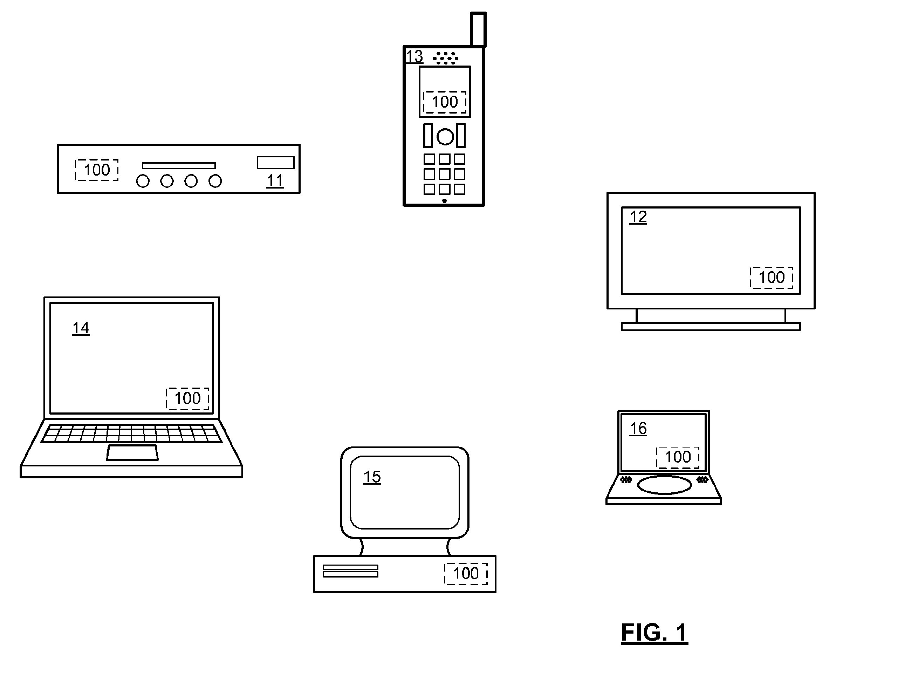

FIG. 1 presents a pictorial representation of example devices 11-16 that can include a processing system 100 in accordance with an embodiment of the present disclosure. In particular, these example devices include digital video recorder/set top box 11, television or monitor 12, wireless telephony device 13, computers 14 and 15, personal video player 16, or other devices that include a processing system 100.

The processing system 100 includes a plurality of clients such as embedded processors, hardware interfaces, etc. One of these processors executes an operating system having a plurality of operating system processes, wherein each of the plurality of operating system processes is designated as a corresponding one of a plurality of virtual clients. A memory module includes a plurality of memory blocks. A memory arbitration module receives a request to access a selected one of the plurality of memory blocks from at least one of the plurality of actual or virtual clients and determines whether or not to grant or deny the request, based on whether the selected memory block is designated for trusted or untrusted access and based on whether the actual or virtual client is trusted or untrusted.

The processing system 100 also includes a register space for storing a plurality of register data in a plurality of registers and secure access data corresponding to the register space. A register arbitration module receives a request to access a selected one of the plurality of registers from at least one of the plurality of actual or virtual clients and determines whether or not to grant or deny the request, based on whether the selected register is designated for trusted or untrusted access and based on whether the actual or virtual client is trusted or untrusted.

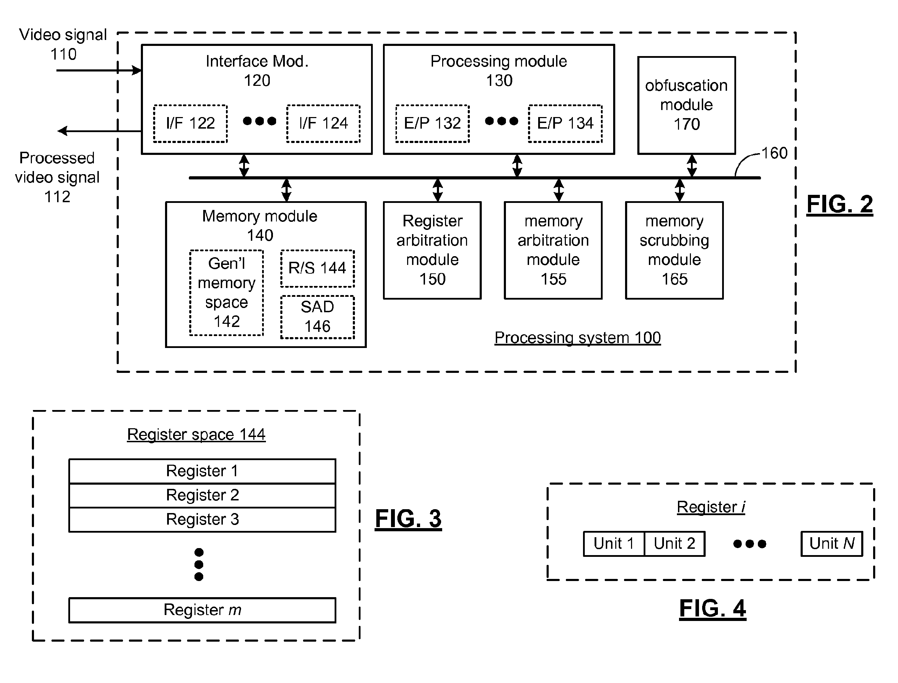

In this fashion, the memory and register arbitration modules can help prevent unauthorized access to the register space and the memory blocks to prevent tampering and/or unauthorized copying. Processing system 100 will be described in greater detail in conjunction with FIGs. 2-15, including several optional functions and features.

FIG. 2 presents a block diagram representation of a processing system 100 in accordance with an embodiment of the present disclosure. In particular, processing system 100 includes interface module 120, processing module 130, memory module 140, register arbitration module 150, memory arbitration module 155, memory scrubbing module 165, obfuscation module 170 and bus 160 such as an I²C bus or other bus. While a particular bus architecture is shown, alternative architectures using direct connectivity between one or more modules and/or additional buses can likewise be implemented in accordance with the present disclosure. In an embodiment of the present disclosure, processing system 100 is implemented via a system on a chip integrated circuit. Further, processing system 100 can include one or more additional modules that are not specifically shown.

In operation, the video processing system 100 can perform one or more video processing functions implemented via one or more routines running on processing module 130 or one or more dedicated video processing engines included as one or more embedded processors 132, 134 ... of processing module 130.

In one example, interface module 120 receives a video signal 110 and outputs a processed video signal 112 based on an encoding of the video signal 110, a decoding of the video signal 110 and/or a transcoding of the video signal 110. While referred to as video signals, video signal 110 and processed video signal 112 can each include an associated audio component. As used herein, transcoding can include transrating, transcrypting, and/or transcaling the video signal 110 to generate processed video signal 112 in addition to transcoding the video signal 110 from one encoded video format into another encoded video format (MPEG1,2,4 to H.264, etc.) to form processed video signal 112. Transcoding can further include transcoding the audio portion of video signal 110 to a different sample rate, encoding standard or other digital format, stereo to mono, etc.

Interface module 120 can receive video signal 110 via a wireless receiver via a WLAN, Bluetooth connection, infrared connection, wireless telephony receiver or other wireless data connection, or a wired modem or other network adaptors that uses a wired receiver or other device to receive the decrypted signal from a LAN, the Internet, cable network, telephone network or other network or from another device. Interface module 120 can also receive video signal 110 in accordance with an Ethernet protocol, a memory card protocol, USB protocol, Firewire (IEEE 1394) protocol, SCSI protocol, PCMCIA protocol, or other protocol either standard or proprietary.

Video signal 110 and processed video signal 112 can each be analog or digital video signals in any of a number of video formats with or without an associated audio component. Such analog video signal can include formats such as National Television Systems Committee (NTSC), Phase Alternating Line (PAL) or *Sequentiel Couleur Avec Memoire* (SECAM). Such digital video formats can include formats such as H.264, MPEG-4 Part 10 Advanced Video Coding (AVC) or other digital format such as a Moving Picture Experts Group (MPEG) format (such as MPEG1, MPEG2 or MPEG4), Quicktime format, Real Media format, Windows Media Video (WMV), Audio Video Interleave (AVI), high definition media interface (HDMI) or another compressed or uncompressed digital video format, either standard or proprietary.

Video signal 110 and/or processed video signal 112 can be generated in association with a set-top box, television receiver, personal computer, cable television receiver, satellite broadcast receiver, broadband modem, 3G transceiver, a broadcast satellite system, internet protocol (IP) TV system, the Internet, a digital video disc player, a digital video recorder, a video conferencing system, a video security system, a video camera or other video device. In an embodiment of the present disclosure, the video signals 110 and or 112 can include a broadcast video signal, such as a television signal, high definition television signal, enhanced high definition television signal or other broadcast video signal that has been transmitted over a wireless medium, either directly or through one or more satellites or other relay stations or through a cable network, optical network or other transmission network. In addition, the video signal 110 and/or processed video signal 112 can be locally generated via a video camera, generated from a stored video file, played back from a recording medium such as a magnetic tape, magnetic disk or optical disk, and can include a streaming video signal that is transmitted over a public or private network such as a local area network, wide area network, metropolitan area network or the Internet.

Memory module 140 includes a general memory space 142 that is segregated into a plurality of memory blocks. A first subset of the plurality of memory blocks are designated for trusted access and a second subset of the plurality of memory blocks are designated for untrusted access. The memory module also includes a register space 144 that includes a plurality of registers. A first subset of the plurality of registers are designated for trusted access and a second subset of the plurality of registers are designated for untrusted access.

The memory module 140 also stores, in one or more of the memory blocks of the general memory space 142 for example, an operating system such as a Linux, Mac OS, MS Windows, Solaris or other operating system and one or more applications to be executed by processing system 100. When executed, the operating system includes a plurality of processes that are treated as virtual clients for purposes of determining which registers and which memory blocks can be accessed by each process. A "process" is an instance of a program running in a computer. Multiple processes can be executed simultaneously in most operating systems. In UNIX, Linux and some other operating systems, a process is started whenever a program is initiated (either by a user entering a shell command or by another program). Like a task, a process is a running program with which a particular set of data is associated so that the process can be kept track of. An application that is being shared by multiple users will generally have one process at some stage of execution for each user. A process can spawn a subprocess, which is a called a child process (and the initiating process is sometimes referred to as its parent). A child process can be a replica of the parent process and shares some of its resources, but cannot exist if the parent is terminated. Processes can exchange information or otherwise synchronize their operation through several methods of inter-process communication.

In addition, the memory module 140 stores secure access data 146 that is used by register arbitration module 150 to arbitrate requests for accessing the register space and by the memory arbitration module 155 to arbitrate requests for accessing the memory blocks. While not specifically shown, the memory module 140 can store program files and other data files, system data, buffers, drivers, utilities and other system programs, and other data. Memory module 140 may be a single memory device or a plurality of memory devices. Such a memory device can include a hard disk drive or other disk drive, read-only memory, random access memory, volatile memory, non-volatile memory, static memory, dynamic memory, flash memory, cache memory, and/or any device that stores digital information.

The processing module 130 can be implemented using one or more embedded processors 132, 134 ... that operate as a secure system/ main CPU. Each of the processors can be implemented as one or more physical processors, virtual hardware blocks, interface devices or any other device that is capable of issuing a request to access one or more memory blocks and/or registers. Other ones of the embedded processors 132, 134 operate as other clients to perform other functions of the processing system 100. Interface module 120 includes one or more interfaces to other devices that are either included or coupled to a device that hosts processing system 100. These interfaces 122, 124, etc., can include a personal computer interface (PCI), personal computer memory card international association (PCMCIA) interface, universal serial bus (USB) interface an Ethernet interface, Firewire (IEEE 1394) interface, small computer system interface (SCSI), a device test interface such as a joint test action group (JTAG) interface, or other interface, either standard or proprietary. While not specifically shown, the interface module 120 can include other serial or parallel interfaces to other devices or modules of processing system 100.

The interfaces 122, 124 ... and the embedded processors 132, 134 ... can each be considered actual (non-virtual) clients that may request access to the general memory space 142 and the register space 144. Each of the actual clients may also request access to the general memory space 142 and the register space 144. These clients can be designated as either trusted or untrusted. Some clients, for example clients that are more susceptible to tampering by a hacker or other unauthorized user, can be designated as untrusted, while other more secure clients can be designated as trusted.

Similarly, virtual clients corresponding to the various processes of the operating system can also be designated as either trusted or untrusted. Some processes, for example processes that are more susceptible to tampering by a hacker or other unauthorized user, can be designated as untrusted, while other more secure processes can be designated as trusted.

Trusted clients and virtual clients are allowed to access trusted and untrusted registers and memory blocks. Untrusted clients and virtual clients are allowed to access only untrusted registers and memory blocks. In this fashion, unsecure clients and processes can be denied access to secure registers and portions of memory to avoid tampering with or loss of secure information, while other processes can safely access this information.

As introduced in conjunction with FIG. 1, the memory arbitration module 155 receives a request to access a selected one of the plurality of memory blocks from at least one of the plurality of virtual actual clients and determines whether or not to grant or deny the request, based on whether the selected memory block is designated for trusted or untrusted access and based on whether the virtual or actual client is trusted or untrusted. Access as described herein can include read access and or write access. Different designations of trusted or untrusted can be applied to different forms of access. Further, a proportional total number of memory blocks are classed as protected not-writeable. Any client attempt to write these regions will result in suppression of the write and assertion of a status bit, interrupt, or other mechanism indicating the occurrence of an illegal write event.

In an embodiment, the memory arbitration module 155 provides a central hardware mechanism responsible for arbitrating memory access requests, such as read and write requests from all clients (virtual or actual) and enumerating the address of the targeted memory block. All clients and virtual clients can be arbitrated equally using a balanced arbitration scheme. In an embodiment of the present disclosure, the addressable units of each of the memory are not uniquely identified for purposes of security. A request to access any one of the addressable units of a memory block is treated similarly as a request for any or all of the remaining units of that memory block.

In an example of operation, the memory arbitration module 155 receives a request to access a memory block of general memory space 142 that includes an address of one or more of the addressable memory units of that memory block. The memory arbitration module 155 determines the particular memory block that corresponds to the request based on the address or addresses. The memory arbitration module 155 evaluates the secure access data 146 to determine if the client making the request is trusted. If so, the read or write operation is allowed to be completed unhindered. If however the client is untrusted, the targeted address is decoded to determine the particular memory block to be accessed. If the targeted address is to a memory block designated only for trusted access, the operation is discarded. For example, read commands can be returned with NULL data. Write commands can be discarded. If however the secure access data 146 indicates that the targeted address is a memory block designated for untrusted access, the operation is allowed to be completed unhindered.

In addition, to the access restrictions above, memory arbitration module 155 operates to designate, such as on a per actual or virtual client basis, regions of memory that may be classed as executable. In regions classed as executable for a given virtual or actual client, every instruction fetch outside of the permitted region(s) results in an interrupt event or other mechanism by the secure system/main CPU. In addition to generating an interrupt or other security in the event of instruction read requests outside of executable regions, write requests to the executable regions may be conditionally discarded. These executable regions are a unique set, which may or may not be mutually exclusive of trusted/untrusted designation. However, trusted and untrusted designations are mutually exclusive by definition.

With these controls, the memory arbitration module 155 can segment and designate blocks of memory into segments of code which are executable only by specific virtual or actual clients and further to define which memory clients are permitted to otherwise access/alter these memory blocks. For example, these controls can be used to define code spaces where specific clients (i.e. CPU's or O/S processes) are permitted to execute from and to only permit trusted clients or processes to alter the code space.

The memory scrubbing module 165 operates as a Secure Boot Controller (SBC) CPU which is responsible for securely booting the system (i.e. decrypting and signing code which runs in the processing system 100). After boot up, this processor may be tasked to perform a background scrubbing of code spaces such as general memory spaces 142 and secure access data 146. The memory scrubbing module 165 can, for example, run SHA-256 signature checks on these code spaces. In this way if a hacker somehow alters the code which a processor is intended to execute then the SBC processor can detect the attack and take action to prevent the hacker from executing their code -- for example by resetting the secure system/main processor.

The obfuscation module 170 performs a hardware obfuscation function to alter every read and write command to all of the memory modules 140 or external memory devices of the memory module 140. The hardware obfuscation function can implement an address obfuscation and/or code obfuscation based on a random key. The obfuscation module 170 can generate and/or use a new random key every time the processing system 100 is reset. This technique is used to prevent hackers from altering the code space of memory module 140 or to protect other data.

The processing system 100 also includes a register space 144 for storing a plurality of register data in a plurality of registers and secure access data corresponding to the register space. A register arbitration module 150 receives a request to access a selected one of the plurality of registers from at least one of the plurality of virtual or actual clients and determines whether or not to grant or deny the request, based on whether the selected register is designated for trusted or untrusted access and based on whether the virtual or actual client is trusted or untrusted.

In an embodiment of the present disclosure, register arbitration module 150 can be implemented via a state machine, digital logic circuitry or other hardware to enhance the security of processing system 100. However, in alternative embodiments, software or firmware can be used in the implementation of register arbitration module 150. It should be noted that register arbitration module 150 can be implemented as a standalone device or as part of the memory arbitration module 155, a memory manager or other module.

In an embodiment, the register arbitration module 150 provides a central hardware mechanism responsible for arbitrating register access requests, such as register read and register write requests from all clients and enumerating the address of the targeted register space. All clients and virtual clients may be arbitrated equally using a balanced arbitration scheme. In an embodiment of the present disclosure, the addressable units of each of the registers are not uniquely identified for purposes of security. A request to access any one of the addressable units of a register is treated similarly as a request for any or all of the remaining units of that register.

In an example of operation, the register arbitration module 150 receives a request to access a register of register space 144 that includes an address of one or more of the addressable memory units of that register. The register arbitration module 150 determines the particular register that corresponds to the request based on the address or addresses. The register arbitration module 150 evaluates the secure access data 146 to determine if the client making the request is trusted. If so, the read or write operation is allowed to be completed unhindered. If however the client is untrusted, the targeted address is decoded to determine the register to be accessed. If the targeted address is to a register designated only for trusted access, the operation is discarded. For example, read commands can be returned with NULL data. Write commands can be discarded. If however the secure access data 146 indicates that the targeted address is a register designated for untrusted access, the operation is allowed to be completed unhindered.

Further details regarding the operation of processing system 100 including optional functions and features and optional formats of general memory space 142, register space 144, secure access data 146 are presented in conjunction with the example discussed in association with FIGs. 3-7.

FIG. 3 presents a block diagram representation of a register space 144 in accordance with a further embodiment of the present disclosure. FIG. 4 presents a block diagram representation of a register in accordance with a further embodiment of the present disclosure. These examples consider the case where register space 144 is divided into M registers as shown in FIG. 3. Each register includes *N* units that can each be separately addressable memory locations as shown in FIG. 4. Register arbitration module 150 filters register access requests from C actual clients and V virtual clients, allowing these clients to share the register space. The C actual clients can include embedded CPU's, PCI Host, USB Host, I²C Host, JTAG, any of the interfaces (122, 124, ...), embedded processors (132, 134, ...) V virtual clients, such as the various processes of the operating system and/or other mechanisms with access to the register space 144.

As previously discussed, the registers of register space 144 can be segmented into banks for trusted and untrusted access. The register banks are defined by register setting as either Trusted or Untrusted. The restriction may be applied to any register client within the SOC and can be enforced in hardware via the register arbitration module 150 (i.e. every register read/write (R/W) must be to a permitted bank of registers). In this example, trusted actual and virtual clients may R/W any bank of registers. Untrusted virtual and actual clients attempts to R/W to trusted Banks of registers are denied. The secure access data 146 can be stored in one or more registers designated as trusted.

In an embodiment, the registers banks are segmented into 1K banks. Individual register clients may be designated as trusted or untrusted, either globally or on a register by register basis. The trusted or untrusted status of a virtual or actual client can be designated by a sticky status bit or other mechanism for this designation to persist -- e.g. once a client is defined as untrusted, this designation may not be changed until the chip is reset.

The registers which set the trusted or untrusted state of register banks may themselves be restricted to trusted clients -- e.g. after being configured only a trusted client may change the settings for which register banks are trusted. In one example of operation, the register arbitration module 150 only permits trusted clients to access specific register banks which are allocated in functional groups. For example the registers which control the Ethernet interface may be made accessible to just the client which operates the TCP stack. This provides for a high degree of granularity when allocating specific R/W functions to specific virtual and/or actual clients.

While register status designations were described above as being implemented as sticky or persistent, other security mechanisms are possible. The status indicators for the register space can reside "in" the register space itself, and therefore be protected by the same Trusted/Untrusted mechanisms as other spaces. Hence, Trusted clients may change the access rights for Trusted and Untrusted clients dynamically if desired. Untrusted clients would (in general) be prevented from accessing the register that contains these status indicators. The register that contains these indicators may further be optionally "locked" by means of sticky register bit(s).

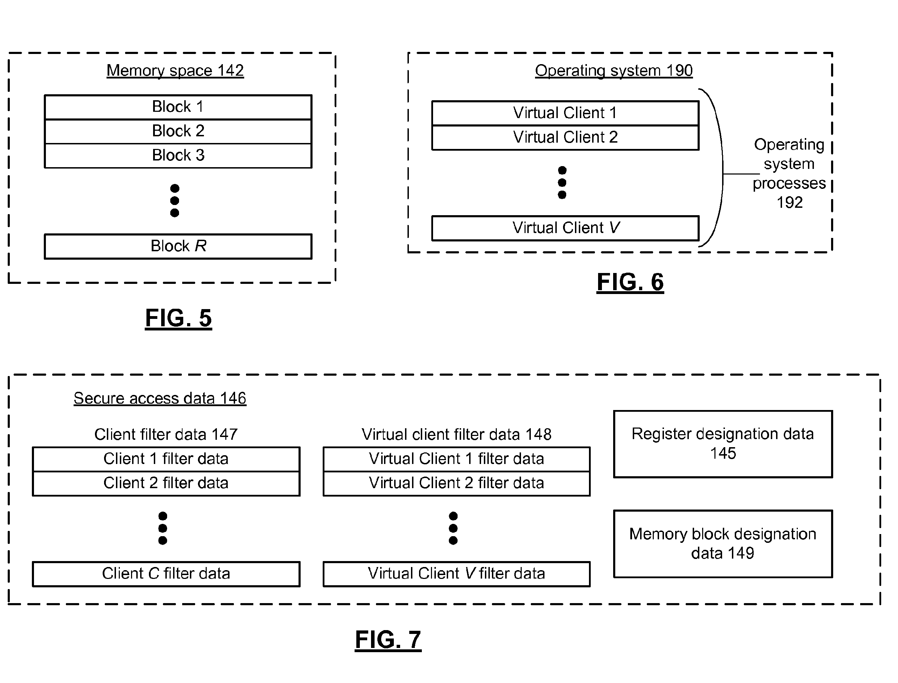

FIG. 5 presents a block diagram representation of a memory space 142 in accordance with a further embodiment of the present disclosure. In particular, memory space 142 is segmented in to R blocks. These blocks can contain the operating system, utilities, applications and other processes and executable code, and/or other data. The memory space 142 is segmented into regions of trusted and untrusted access. For example, it is typical to locate an untrusted application and the operating system itself within the untrusted region of memory. Typically decrypted content is located in the trusted memory area, i.e. an untrusted client may not access content directly. Keys can be stored in the trusted portion of memory, or in a separate key store memory that is not accessible by any software (trusted or not).

In an embodiment, the regions are defined by register setting (Low and High Watermark) which define the trusted and untrusted regions of memory. The restriction may be applied to any actual or virtual client with the SOC and is enforced by the memory arbitration module 155 (i.e. every memory read/write must be to a permitted region). In particular, Trusted Clients may R/W any region of the memory space 142. Untrusted Clients may only R/W to the untrusted region of memory space 142.

In one mode of operation, the Hi/Lo Watermark is set by registers of the register space 144 with a granularity of 1 megabyte. After the Hi/Lo watermarks are set, these designations can be protected by a sticky bit which disables any change to the Hi/Lo watermark until a reset of the chip, by storing the Hi/Lo addresses in secure register space or by other security mechanisms.. In this way the memory partitioning may be set on power up by a trusted software and never changed thereafter until the processing system 100 is reset or changes are can be made by only trusted clients.

While the foregoing discussion has referred to Hi/Lo watermarks, it should be noted that this terminology generally refers to the high and low bounds of particular memory blocks, or more generally to the limits or ranges of addresses in memory for one or more particular memory blocks, memory partitions or memory segments that can be delineated by these memory addresses. More generally, each memory block or other segment or memory partition can be designated by its own top and bottom address. Considering n+1 memory blocks (0, 1, ... n), the addresses of the Hi and Lo bounds can be represented by:
Top[0], Bottom[0], Top[1], Bottom[1], ... Top[n], Bottom[n]
Each memory block x is bounded by a range (Top[x], Bottom[x]) and is considered inclusively secure. In another embodiment, each memory block x may also be implemented as Base[x], Size[x]. Again, this implies a starting address of a secure range, and the size may be used to determine the end of the range. Untrusted accesses to secure region(s) can be discarded.

FIG. 6 presents a block diagram representation of an operating system 190 in accordance with a further embodiment of the present disclosure. An operating system 190, such as a Linux, Mac OS, MS Windows, Solaris or other operating system is shown that includes a plurality of operating system processes 192 that are treated as *V* virtual clients for purposes of determining which registers and which memory blocks can be accessed by each process. As previously discussed each of the V virtual clients can be separately designated as either trusted or untrusted for the purposes of determining memory and register access for read and write operation and for sandboxing to determine which blocks of memory can be executed.

For example, individual processes running within an operating system such as Linux and the operating system itself can be secured using the register arbitration module 150 and memory arbitration module 155. A hardware signal exported from one or more processors that execute Linux processes can indicate the trusted/untrusted status of each process. This signal will be used by the register arbitration module 150 and memory arbitration module 155 to restrict memory/register access and to perform sandboxing similar to the restrictions applied to actual memory/register clients on a per Linux process basis.

FIG. 7 presents a block diagram representation of secure access data 146 in accordance with a further embodiment of the present disclosure. Secure access data 146 includes register designation data 145 that designates each of the *M* registers for either trusted or untrusted access and memory block designation data 149 that designates each of the *R* memory blocks for either trusted or untrusted access and further whether the memory block can be executed. Secure access data 146 also includes client filter data 147 that categorizes each of the *C* clients as either trusted or untrusted and virtual client filter data 148 that categorizes each of the *V* virtual clients as either trusted or untrusted. This designation can be set globally for all registers and memory blocks or include separate trusted/untrusted designations for registers and trusted/untrusted designations and/or separate execution permission for individual memory blocks.

In an embodiment, trusted/untrusted designations assigned to each client and virtual client can be set for each separate register or register bank and for each separate memory block. In particular, client filter data 147 can include *M* bits of data that represent the designation of each client device for each register and R bits of data that represent the designation of each client device for each memory block.

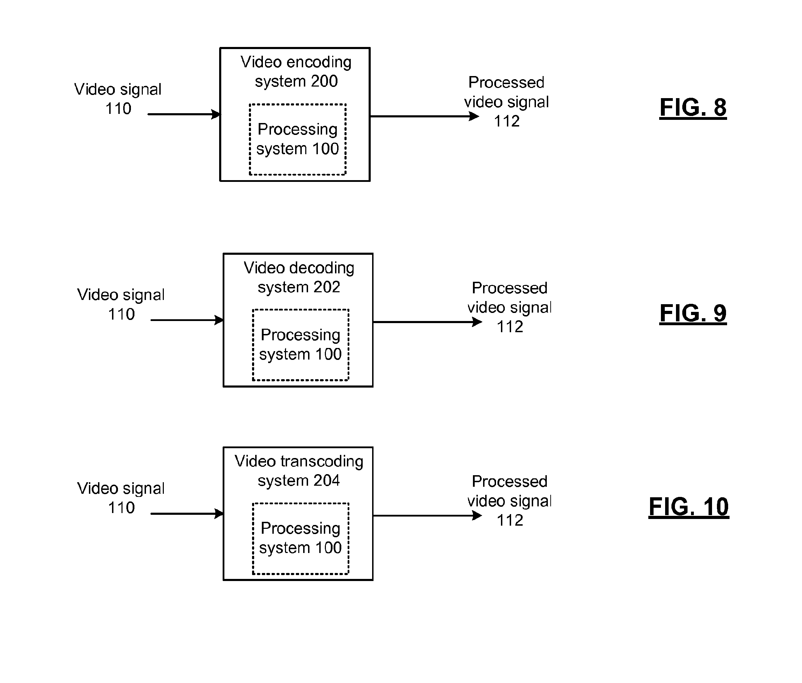

FIG. 8 presents a block diagram representation of a video encoding system 200 in accordance with an embodiment of the present disclosure. In particular, video encoding system 200, such as video processing system 100, operates in accordance with many of the functions and features of the H.264, MPEG-4 Part 10 Advanced Video Coding (AVC), or other digital format such as a Moving Picture Experts Group (MPEG) format (such as MPEG1, MPEG2 or MPEG4), VC-1 (SMPTE standard 421M), Quicktime format, Real Media format, Windows Media Video (WMV), Audio Video Interleave (AVI), high definition media interface (HDMI) or another digital video format, either standard or proprietary or other video format, to encode input video signals 110 to form processed video signal 112.

FIG. 9 presents a block diagram representation of a video decoding system 202 in accordance with an embodiment of the present disclosure. In particular, video decoding system 202, such as video processing system 100, operates in accordance with many of the functions and features of the H.264, MPEG-4 Part 10 Advanced Video Coding (AVC), or other digital format such as a Moving Picture Experts Group (MPEG) format (such as MPEG1, MPEG2 or MPEG4), VC-1 (SMPTE standard 421M), Quicktime format, Real Media format, Windows Media Video (WMV), Audio Video Interleave (AVI), high definition media interface (HDMI) or another digital video format, either standard or proprietary or other video format, to decode input video signals 110 to form processed video signal 112.

FIG. 10 presents a block diagram representation of a video transcoding system 204 in accordance with an embodiment of the present disclosure. In particular, video transcoding system 204, such as video processing system 100, operates in accordance with many of the functions and features of the H.264, MPEG-4 Part 10 Advanced Video Coding (AVC), or other digital format such as a Moving Picture Experts Group (MPEG) format (such as MPEG1, MPEG2 or MPEG4), VC-1 (SMPTE standard 421M), Quicktime format, Real Media format, Windows Media Video (WMV), Audio Video Interleave (AVI), high definition media interface (HDMI) or another digital video format, either standard or proprietary or other video format, to transcode video signal 110 to form processed video signal 112.

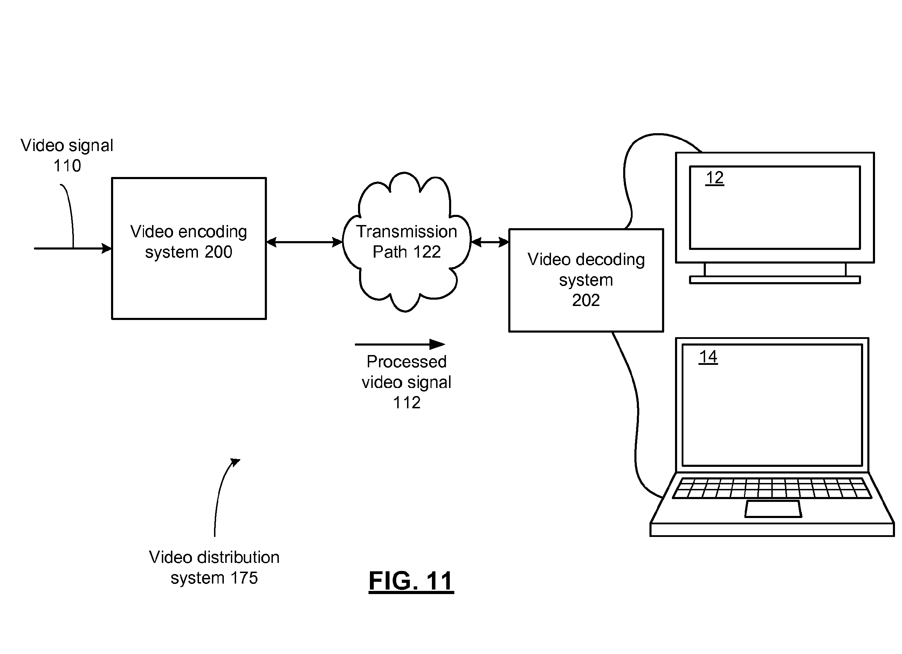

FIG. 11 presents a block diagram representation of a video distribution system 175 in accordance with an embodiment of the present disclosure. In particular, processed video signal 112 is transmitted via a transmission path 122 to a video decoding system 202. Video decoding system 202, in turn can operate to decode the processed video signal 112 for display on a display device such as television 12, computer 14 or other display device.

The transmission path 122 can include a wireless path that operates in accordance with a wireless local area network protocol such as an 802.11 protocol, a WIMAX protocol, a Bluetooth protocol, etc. Further, the transmission path can include a wired path that operates in accordance with a wired protocol such as a USB protocol, high-definition multimedia interface (HDMI) protocol an Ethernet protocol or other protocol.

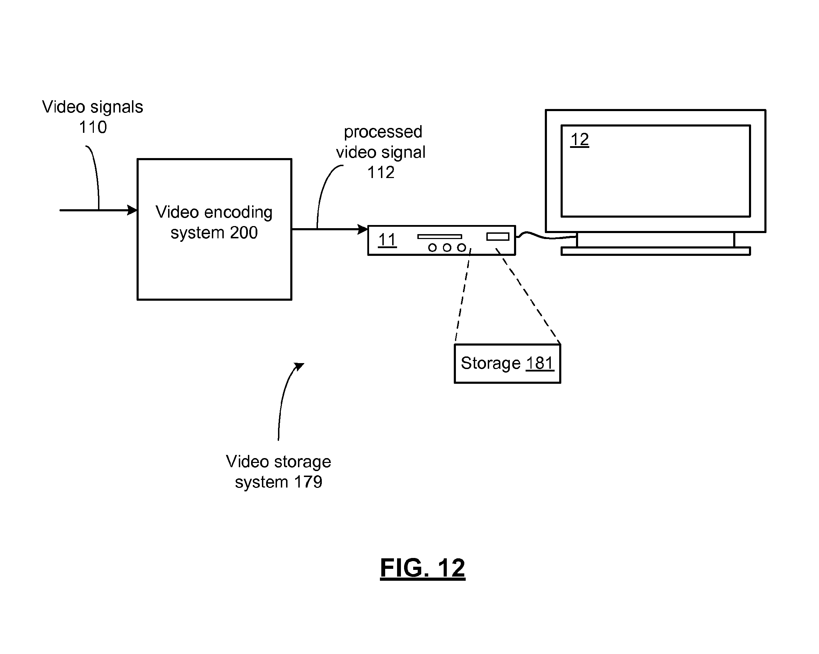

FIG. 12 presents a block diagram representation of a video storage system 179 in accordance with an embodiment of the present disclosure. In particular, device 11 is a set top box with built-in digital video recorder functionality, a stand alone digital video recorder, a DVD recorder/player or other device that stores the processed video signal 112 in storage 181 for display on video display device such as television 12. Storage 181 can include a hard disk drive optical disk drive or other disk drive, read-only memory, random access memory, volatile memory, non-volatile memory, static memory, dynamic memory, flash memory, cache memory, and/or any device that stores digital information. Storage 181 can be integrated in the device 11 or coupled to the device 11 via a network, wireline coupling or other connection.

While video encoding system 200 is shown as a separate device, it can further be incorporated into device 11. While these particular devices are illustrated, video storage system 179 can include a hard drive, flash memory device, computer, DVD burner, or any other device that is capable of generating, storing, decoding and/or displaying a video signal in accordance with the methods and systems described in conjunction with the features and functions of the present disclosure as described herein.

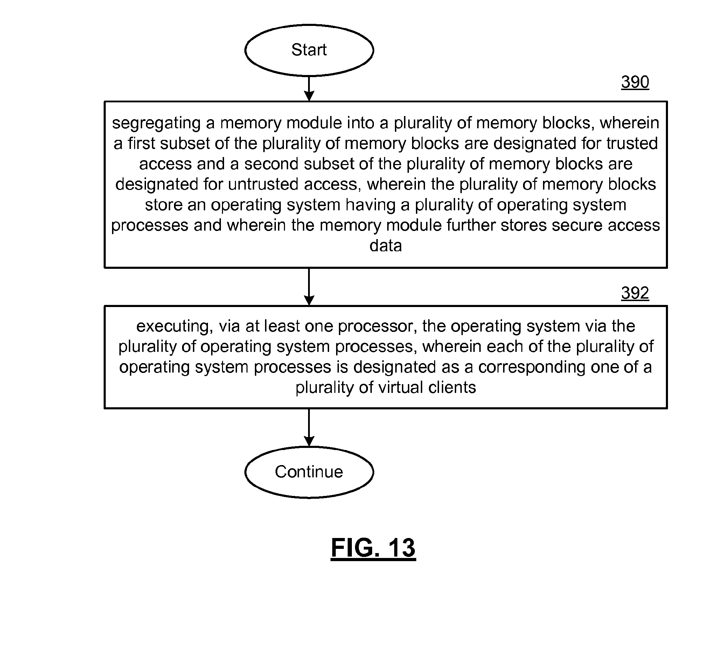

FIG. 13 presents a flowchart representation of a method in accordance with an embodiment of the present disclosure. In particular a method is presented for use in conjunction with one or more functions and features described in conjunction with FIGS. 1-12. Step 390 includes segregating a memory module into a plurality of memory blocks, wherein a first subset of the plurality of memory blocks are designated for trusted access and a second subset of the plurality of memory blocks are designated for untrusted access, wherein the plurality of memory blocks store an operating system having a plurality of operating system processes and wherein the memory module further stores secure access data. Step 392 includes executing, via at least one processor, the operating system via the plurality of operating system processes, wherein each of the plurality of operating system processes is designated as a corresponding one of a plurality of virtual clients.

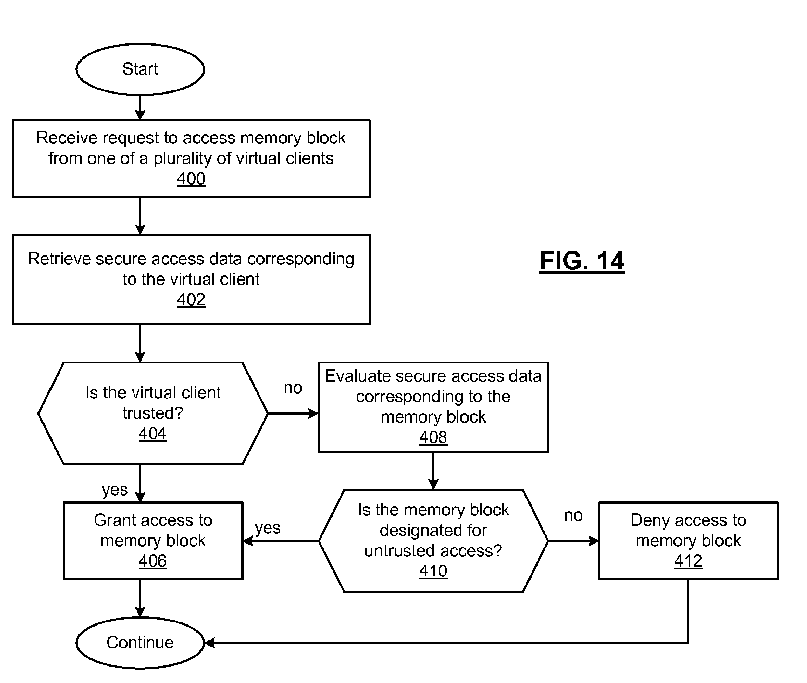

FIG. 14 presents a flowchart representation of a method in accordance with an embodiment of the present disclosure. In particular a method is presented for use in conjunction with one or more functions and features described in conjunction with FIGS. 1-13. In step 400, a request to access one of the plurality of memory blocks is received from at least one of a plurality of virtual clients. In step 402, secure access data corresponding to the at least one of the plurality of virtual clients is retrieved to determine when the at least one of the plurality of virtual clients is trusted as shown in decision block 404. In step 406, the request to access the one of the plurality of memory blocks is granted when the at least one of the plurality of virtual clients is trusted. When the at least one of the plurality of clients is not trusted, secure access data is evaluated to determine when the one of the plurality of memory blocks is designated as untrusted as shown in step 408 and decision block 410. The method also proceeds to grant the request to access the one of the plurality of memory block in step 406 when the one of the plurality of memory blocks is designated for untrusted access. In step 412, the request to access the one of the plurality of memory blocks is denied when the one of the plurality of memory blocks is designated for trusted access.

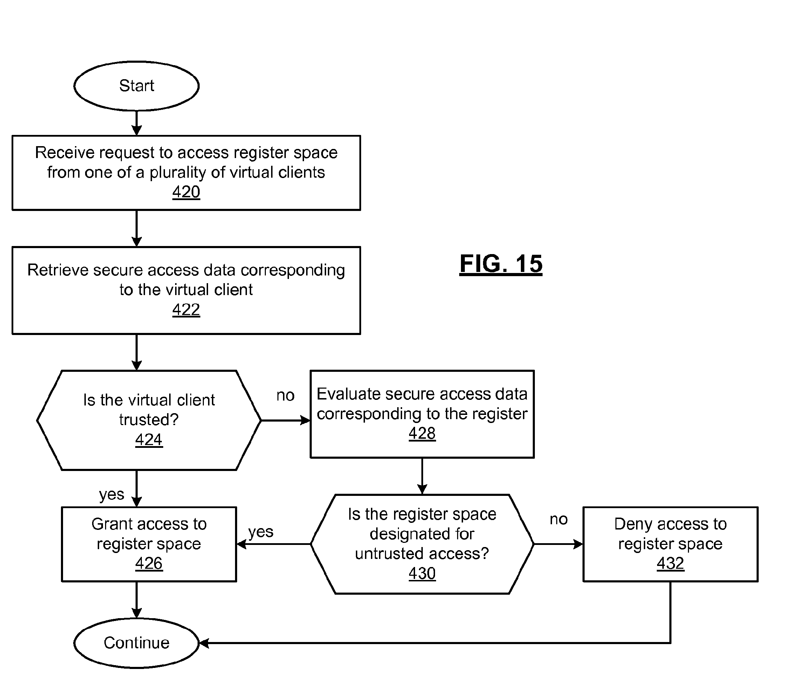

FIG. 15 presents a flowchart representation of a method in accordance with an embodiment of the present disclosure. In particular a method is presented for use in conjunction with one or more functions and features described in conjunction with FIGS. 1-14. In step 420, a request to access one of the plurality of registers is received from at least one of a plurality of virtual clients. In step 422, secure access data corresponding to the at least one of the plurality of clients is retrieved to determine when the at least one of the plurality of virtual clients is trusted as shown in decision block 424. In step 426, the request to access the one of the plurality of registers is granted when the at least one of the plurality of virtual clients is trusted. When the at least one of the plurality of virtual clients is not trusted, secure access data is evaluated to determine if the register is designated for untrusted access as shown in step 428 and decision block 430. The method also proceeds to grant the request to access the one of the plurality of registers in step 426 when the register is designated for untrusted access. In step 432, the request to access the one of the plurality of registers is denied when the register is designated for trusted access.

It is noted that terminologies as may be used herein such as bit stream, stream, signal sequence, etc. (or their equivalents) have been used interchangeably to describe digital information whose content corresponds to any of a number of desired types (e.g., data, video, speech, audio, etc. any of which may generally be referred to as 'data').

As may also be used herein, the term(s) "configured to", "operably coupled to", "coupled to", and/or "coupling" includes direct coupling between items and/or indirect coupling between items via an intervening item (e.g., an item includes, but is not limited to, a component, an element, a circuit, and/or a module) where, for an example of indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "configured to", "operable to", "coupled to", or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may also be used herein, the terms "processing module", "processing circuit", "processor", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

One or more embodiments have been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

In addition, a flow diagram may include a "start" and/or "continue" indication. The "start" and "continue" indications reflect that the steps presented can optionally be incorporated in or otherwise used in conjunction with other routines. In this context, "start" indicates the beginning of the first step presented and may be preceded by other activities not specifically shown. Further, the "continue" indication reflects that the steps presented may be performed multiple times and/or may be succeeded by other activities not specifically shown. Further, while a flow diagram indicates a particular ordering of steps, other orderings are likewise possible provided that the principles of causality are maintained.

The one or more embodiments are used herein to illustrate one or more aspects, one or more features, one or more concepts, and/or one or more examples. A physical embodiment of an apparatus, an article of manufacture, a machine, and/or of a process may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of one or more of the embodiments. A module implements one or more functions via a device such as a processor or other processing device or other hardware that may include or operate in association with a memory that stores operational instructions. A module may operate independently and/or in conjunction with software and/or firmware. As also used herein, a module may contain one or more sub-modules, each of which may be one or more modules.

While particular combinations of various functions and features of the one or more embodiments have been expressly described herein, other combinations of these features and functions are likewise possible. The present disclosure is not limited by the particular examples disclosed herein and expressly incorporates these other combinations.

## Claims

1. A processing system comprising:
a memory module (140) wherein the memory module (140) includes a plurality of memory blocks; wherein a first subset of the plurality of memory blocks are designated for trusted access and a second subset of the plurality of memory blocks are designated for untrusted access, wherein the plurality of memory blocks store an operating system (190) having a plurality of operating system processes (192) and wherein the memory module (140) further stores secure access data (146);
a plurality of clients, coupled to memory module (140), including at least one processor that executes the operating system (190) via the plurality of operating system processes (192), wherein each of the plurality of operating system processes (192) is designated as a corresponding one of a plurality of virtual clients;
a memory arbitration module (155), coupled to the memory module (140) and the plurality of clients, wherein the memory arbitration module (155):
receives (400) a first request to access a first selected one of the plurality of memory blocks from at least one of the plurality of virtual clients;
determines one of: the first selected one of the plurality of memory blocks is designated for trusted access, and the selected one of the plurality of memory blocks is designated for untrusted access;
grants (406) the first request to access the first selected one of the plurality of memory blocks when the first selected one of the plurality of memory blocks is designated for untrusted access;
when the first selected one of the plurality of memory blocks is designated for trusted access, retrieves secure access data (146) corresponding to the at least one of the plurality of virtual clients to determine when the at least one of the plurality of virtual clients is trusted; and
grants (406) the first request to access the first selected one of the plurality of memory blocks when the at least one of the plurality of virtual clients is trusted.

2. The processing system of claim 1, wherein the memory arbitration module (155) further:
denies (412) the first request to access the first selected one of the plurality of memory blocks when the first selected one of the plurality of memory blocks is designated for trusted access and the at least one of the plurality of virtual clients is untrusted.

3. The processing system of claim 1 or 2, wherein the memory arbitration module (155):
receives a second request to access a second selected one of the plurality of memory blocks from at least one of the plurality of clients;
determines one of: the second selected one of the plurality of memory blocks is designated for trusted access, and the second selected one of the plurality of memory blocks is designated for untrusted access;
grants the second request to access the second selected one of the plurality of memory blocks when the second selected one of the plurality of memory blocks is designated for untrusted access;
when the second selected one of the plurality of memory blocks is designated for trusted access, retrieves secure access data (146) corresponding to the at least one of the plurality of clients to determine when the at least one of the plurality of clients is trusted; and
grants the second request to access the second selected one of the plurality of memory blocks when the at least one of the plurality of virtual clients is trusted.

4. The processing system of claim 3, wherein the memory arbitration module (155) further:
denies the second request to access the second selected one of the plurality of memory blocks when the second selected one of the plurality of memory blocks is designated for trusted access and the at least one of the plurality of clients is untrusted.

5. The processing system of any preceding claim, wherein the memory module (140) includes a register space (144) for storing a plurality of register data in a plurality of registers, wherein a first subset of the plurality of registers are designated for trusted access and a second subset of the plurality of registers are designated for untrusted access, and wherein the processing system further comprises:
a register arbitration module (150), coupled to the memory module (140) and the plurality of clients, wherein the register arbitration module:
receives (420) a request to access a selected one of the plurality of registers from at least one of the plurality of virtual clients;
determines one of: the selected one of the plurality of registers is designated for trusted access, and the selected one of the plurality of registers is designated for untrusted access;
grants (426) the request to access the selected one of the plurality of registers when the selected one of the plurality of registers is designated for untrusted access;
when the selected one of the plurality of registers is designated for trusted access, retrieves secure access data (146) corresponding to the at least one of the plurality of virtual clients to determine when the at least one of the plurality of virtual clients is trusted; and
grants (426) the request to access the selected one of the plurality of registers when the at least one of the plurality of virtual clients is trusted.

6. The processing system of claim 5, wherein the register arbitration module further:
denies (432) the request to access the selected one of the plurality of registers when the first selected one of the plurality of registers is designated for trusted access and the at least one of the plurality of virtual clients is untrusted.

7. The processing system of any preceding claim, wherein the at least one processor executes a video processing application;
wherein, the plurality of clients includes at least one interface unit that receives a video signal and outputs a processed video signal generated by the video processing application based on at least one of:
an encoding of the video signal;
a decoding of the video signal; and
a transcoding of the video signal.

8. The processing system of claim 7 wherein the at least one processor includes at least one of:
an encoding engine, coupled to the at least one interface unit, for encoding the video signal; and
an decoding engine, coupled to the at least one interface unit, for decoding of the video signal.

9. A method comprising:
segregating (390) a memory module (140) into a plurality of memory blocks, wherein a first subset of the plurality of memory blocks are designated for trusted access and a second subset of the plurality of memory blocks are designated for untrusted access, wherein the plurality of memory blocks store an operating system (190) having a plurality of operating system processes (192) and wherein the memory module (140) further stores secure access data (146);
executing (392), via at least one processor, the operating system (190) via the plurality of operating system processes (192), wherein each of the plurality of operating system processes (192) is designated as a corresponding one of a plurality of virtual clients;
receiving (400) a first request to access a first selected one of the plurality of memory blocks from at least one of the plurality of virtual clients;
determining one of: the first selected one of the plurality of memory blocks is designated for trusted access, and the selected one of the plurality of memory blocks is designated for untrusted access;
granting (406) the first request to access the first selected one of the plurality of memory blocks when the first selected one of the plurality of memory blocks is designated for untrusted access;
when the first selected one of the plurality of memory blocks is designated for trusted access, retrieving secure access data (146) corresponding to the at least one of the plurality of virtual clients to determine when the at least one of the plurality of virtual clients is trusted; and
granting (406) the first request to access the first selected one of the plurality of memory blocks when the at least one of the plurality of virtual clients is trusted.

10. The method of claim 9, further comprising:
denying (412) the first request to access the first selected one of the plurality of memory blocks when the first selected one of the plurality of memory blocks is designated for trusted access and the at least one of the plurality of virtual clients is untrusted.

11. The method of claim 9 or 10, further comprising:
receiving a second request to access a second selected one of the plurality of memory blocks from at least one of the plurality of clients;
determining one of: the second selected one of the plurality of memory blocks is designated for trusted access, and the second selected one of the plurality of memory blocks is designated for untrusted access;
granting the second request to access the second selected one of the plurality of memory blocks when the second selected one of the plurality of memory blocks is designated for untrusted access;
when the second selected one of the plurality of memory blocks is designated for trusted access, retrieving secure access data (146) corresponding to the at least one of the plurality of clients to determine when the at least one of the plurality of clients is trusted; and
granting the second request to access the second selected one of the plurality of memory blocks when the at least one of the plurality of virtual clients is trusted.

12. The method of claim 11, further comprising:
denying the second request to access the second selected one of the plurality of memory blocks when the second selected one of the plurality of memory blocks is designated for trusted access and the at least one of the plurality of clients is untrusted.

13. The method of any of claims 9 to 12, wherein the memory module (140) includes a register space for storing a plurality of register data in a plurality of registers, wherein a first subset of the plurality of registers are designated for trusted access and a second subset of the plurality of registers are designated for untrusted access, and wherein the method further comprises:
receiving (420) a request to access a selected one of the plurality of registers from at least one of the plurality of virtual clients;
determining one of: the selected one of the plurality of registers is designated for trusted access, and the selected one of the plurality of registers is designated for untrusted access;
granting (426) the request to access the selected one of the plurality of registers when the selected one of the plurality of registers is designated for untrusted access;
when the selected one of the plurality of registers is designated for trusted access, retrieving secure access data (146) corresponding to the at least one of the plurality of virtual clients to determine when the at least one of the plurality of virtual clients is trusted; and
granting (426) the request to access the selected one of the plurality of registers when the at least one of the plurality of virtual clients is trusted.

14. The method of claim 13, further comprising:
denying (432) the request to access the selected one of the plurality of registers when the first selected one of the plurality of registers is designated for trusted access and the at least one of the plurality of virtual clients is untrusted.

15. The method of any of claims 9 to 14 further comprising:
receiving a video signal via at least one of the plurality of clients; and
executing, via the at least one processor, a video processing application that processes the video signal by at least one of:
an encoding of the video signal;
a decoding of the video signal; and
a transcoding of the video signal.

## Patentansprüche

1. Verarbeitungssystem aufweisend:
ein Speichermodul (140), wobei das Speichermodul (140) eine Vielzahl von Speicherblöcken umfasst, wobei ein erster Teilsatz der Vielzahl von Speicherblöcken für zuverlässigen Zugriff vorgesehen ist und ein zweiter Teilsatz der Vielzahl von Speicherblöcken für unzuverlässigen Zugriff vorgesehen ist, wobei die Vielzahl von Speicherblöcken ein Betriebssystem (190) mit einer Vielzahl von Betriebssystemprozessen (192) speichert und wobei das Speichermodul (140) außerdem sichere Zugangsdaten (146) speichert,
eine Vielzahl von mit dem Speichermodul (140) gekoppelte Clients, einschließlich mindestens einen Prozessor, der das Betriebssystem (190) über eine Vielzahl von Betriebssystemprozessen (192) ausführt, wobei jedes der Vielzahl von Betriebssystemprozessen (192) als ein entsprechendes einer Vielzahl von virtuellen Clients vorgesehen ist,
ein mit dem Speichermodul (140) und der Vielzahl von Clients gekoppeltes Speicherarbitrierungsmodul (155), wobei das Speicherarbitrierungsmodul (155):
eine erste Anfrage auf Zugriff auf einen ersten ausgewählten der Vielzahl von Speicherblöcken von mindestens einem der Vielzahl von virtuellen Clients empfängt (400),
eines von Folgenden bestimmt: der erste ausgewählte der Vielzahl von Speicherblöcken wird für zuverlässigen Zugriff vorgesehen und der ausgewählte der Vielzahl von Speicherblöcken wird für unzuverlässigen Zugriff vorgesehen,
die erste Anfrage auf Zugriff auf den ersten ausgewählten der Vielzahl von Speicherblöcken gestattet (406), wenn der erste ausgewählte der Vielzahl von Speicherblöcken für unzuverlässigen Zugriff vorgesehen ist,
wenn der erste ausgewählte der Vielzahl von Speicherblöcken für zuverlässigen Zugriff vorgesehen ist, sichere, zum mindestens einen der Vielzahl von virtuellen Clients gehörende Zugangsdaten (146) abruft, um zu bestimmen, wann der mindestens eine der Vielzahl von virtuellen Clients zuverlässig ist, und
die erste Anfrage auf Zugriff auf den ersten ausgewählten der Vielzahl von Speicherblöcken gestattet (406), wenn der mindestens eine der Vielzahl von virtuellen Clients zuverlässig ist.

2. Verarbeitungssystem nach Anspruch 1, wobei das Speicherarbitrierungsmodul (155) ferner:
die erste Anfrage auf Zugriff auf den ersten ausgewählten der Vielzahl von Speicherblöcken ablehnt (412), wenn der erste ausgewählte der Vielzahl von Speicherblöcken für zuverlässigen Zugriff vorgesehen ist und der mindestens eine der Vielzahl von virtuellen Clients unzuverlässig ist.

3. Verarbeitungssystem nach Anspruch 1 oder 2, wobei das Speicherarbitrierungsmodul (155):
eine zweite Anfrage auf Zugriff auf einen zweiten ausgewählten der Vielzahl von Speicherblöcken von mindestens einem der Vielzahl von Clients empfängt,
eines von Folgenden bestimmt: der zweite ausgewählte der Vielzahl von Speicherblöcken wird für zuverlässigen Zugriff vorgesehen und der zweite ausgewählte der Vielzahl von Speicherblöcken wird für unzuverlässigen Zugriff vorgesehen,
die zweite Anfrage auf Zugriff auf den zweiten ausgewählten der Vielzahl von Speicherblöcken gestattet, wenn der zweite ausgewählte der Vielzahl von Speicherblöcken für unzuverlässigen Zugriff vorgesehen ist,
wenn der zweite ausgewählte der Vielzahl von Speicherblöcken für zuverlässigen Zugriff vorgesehen ist, sichere, zum mindestens einen der Vielzahl von Clients gehörende Zugangsdaten (146) abruft, um zu bestimmen, wann der mindestens eine der Vielzahl von Clients zuverlässig ist, und
die zweite Anfrage auf Zugriff auf den zweiten ausgewählten der Vielzahl von Speicherblöcken gestattet, wenn der mindestens eine der Vielzahl von virtuellen Clients zuverlässig ist.

4. Verarbeitungssystem nach Anspruch 3, wobei das Speicherarbitrierungsmodul (155) ferner:
die zweite Anfrage auf Zugriff auf den zweiten ausgewählten der Vielzahl von Speicherblöcken ablehnt, wenn der zweite ausgewählte der Vielzahl von Speicherblöcken für zuverlässigen Zugriff vorgesehen ist und der mindestens eine der Vielzahl von Clients unzuverlässig ist.

5. Verarbeitungssystem nach einem der vorhergehenden Ansprüche, wobei das Speichermodul (140) einen Registerraum (144) zur Speicherung einer Vielzahl von Registerdaten in einer Vielzahl von Registern umfasst, wobei ein erster Teilsatz der Vielzahl von Registern für zuverlässigen Zugriff vorgesehen ist und ein zweiter Teilsatz der Vielzahl von Registern für unzuverlässigen Zugriff vorgesehen ist, und wobei das Verarbeitungssystem ferner Folgendes aufweist:
ein mit dem Speichermodul (140) und der Vielzahl von Clients gekoppeltes Registerarbitrierungsmodul (150), wobei das Registerarbitrierungsmodul:
eine Anfrage auf Zugriff auf ein ausgewähltes der Vielzahl von Registern von mindestens einem der Vielzahl von virtuellen Clients empfängt (420),
eines von Folgenden bestimmt: das ausgewählte der Vielzahl von Registern wird für zuverlässigen Zugriff vorgesehen und das ausgewählte der Vielzahl von Registern wird für unzuverlässigen Zugriff vorgesehen,
die Anfrage auf Zugriff auf das ausgewählte der Vielzahl von Registern gestattet (426), wenn das ausgewählte der Vielzahl von Registern für unzuverlässigen Zugriff vorgesehen ist,
wenn das ausgewählte der Vielzahl von Registern für zuverlässigen Zugriff vorgesehen ist, sichere, zum mindestens einen der Vielzahl von virtuellen Clients gehörende Zugangsdaten (146) abruft, um zu bestimmen, wann der mindestens eine der Vielzahl von virtuellen Clients zuverlässig ist, und
die Anfrage auf Zugriff auf das ausgewählte der Vielzahl von Registern gestattet (426), wenn der mindestens eine der Vielzahl von virtuellen Clients zuverlässig ist.

6. Verarbeitungssystem nach Anspruch 5, wobei das Registerarbitrierungsmodul ferner:
die Anfrage auf Zugriff auf das ausgewählte der Vielzahl von Registern ablehnt (432), wenn das erste ausgewählte der Vielzahl von Registern für zuverlässigen Zugriff vorgesehen ist und der mindestens eine der Vielzahl von virtuellen Clients unzuverlässig ist.

7. Verarbeitungssystem nach einem der vorhergehenden Ansprüche, wobei der mindestens eine Prozessor eine Videoverarbeitungsanwendung ausführt,
wobei die Vielzahl von Clients mindestens eine Schnittstelleneinheit umfasst, die ein Videosignal empfängt und ein verarbeitetes Videosignal ausgibt, das von der Videoverarbeitungsanwendung auf der Basis von mindestens einem der Folgenden erzeugt wird:
einer Codierung des Videosignals,
einer Decodierung des Videosignals, und
einer Transcodierung des Videosignals.

8. Verfahren nach Anspruch 7, wobei der mindestens eine Prozessor mindestens eins von Folgenden umfasst:
eine mit der mindestens einen Schnittstelleneinheit gekoppelte Codiermaschine zur Codierung des Videosignals und
eine mit der mindestens einen Schnittstelleneinheit gekoppelte Decodiermaschine zur Decodierung des Video signals.

9. Verfahren, umfassend:
Aufspalten (390) eines Speichermoduls (140) in eine Vielzahl von Speicherblöcken, **wobei** ein erster Teilsatz der Vielzahl von Speicherblöcken für zuverlässigen Zugriff vorgesehen ist und ein zweiter Teilsatz der Vielzahl von Speicherblöcken für unzuverlässigen Zugriff vorgesehen ist, wobei die Vielzahl von Speicherblöcken ein Betriebssystem (190) mit einer Vielzahl von Betriebssystemprozessen (192) speichert und wobei das Speichermodul (140) außerdem sichere Zugangsdaten (146) speichert,
Ausführen (392), über mindestens einen Prozessor, des Betriebssystems (190) über die Vielzahl von Betriebssystemprozessen (192), wobei jedes der Vielzahl von Betriebssystemprozessen (192) als ein entsprechendes einer Vielzahl von virtuellen Clients vorgesehen ist,
Empfangen (400) einer ersten Anfrage auf Zugriff auf einen ersten ausgewählten der Vielzahl von Speicherblöcken von mindestens einem der Vielzahl von virtuellen Clients,
Bestimmen eines von Folgenden: der erste ausgewählte der Vielzahl von Speicherblöcken wird für zuverlässigen Zugriff vorgesehen und der ausgewählte der Vielzahl von Speicherblöcken wird für unzuverlässigen Zugriff vorgesehen,
Gestatten (406) der ersten Anfrage auf Zugriff auf den ersten ausgewählten der Vielzahl von Speicherblöcken, wenn der erste ausgewählte der Vielzahl von Speicherblöcken für unzuverlässigen Zugriff vorgesehen ist,
wenn der erste ausgewählte der Vielzahl von Speicherblöcken für zuverlässigen Zugriff vorgesehen ist, Abrufen von sicheren, zum mindestens einen der Vielzahl von virtuellen Clients gehörenden Zugangsdaten (146), um zu bestimmen, wann der mindestens eine der Vielzahl von virtuellen Clients zuverlässig ist, und
Gestatten (406) der ersten Anfrage auf Zugriff auf den ersten ausgewählten der Vielzahl von Speicherblöcken, wenn der mindestens eine der Vielzahl von virtuellen Clients zuverlässig ist.

10. Verfahren nach Anspruch 9, ferner umfassend:
Ablehnen (412) der ersten Anfrage auf Zugriff auf den ersten ausgewählten der Vielzahl von Speicherblöcken, wenn der erste ausgewählte der Vielzahl von Speicherblöcken für zuverlässigen Zugriff vorgesehen ist und der mindestens eine der Vielzahl von virtuellen Clients unzuverlässig ist.

11. Verfahren nach Anspruch 9 oder 10, ferner umfassend:
Empfangen einer zweiten Anfrage auf Zugriff auf einen zweiten ausgewählten der Vielzahl von Speicherblöcken von mindestens einem der Vielzahl von Clients,
Bestimmen eines von Folgenden: der zweite ausgewählte der Vielzahl von Speicherblöcken wird für zuverlässigen Zugriff vorgesehen und der zweite ausgewählte der Vielzahl von Speicherblöcken wird für unzuverlässigen Zugriff vorgesehen,
Gestatten der zweite Anfrage auf Zugriff auf den zweiten ausgewählten der Vielzahl von Speicherblöcken, wenn der zweite ausgewählte der Vielzahl von Speicherblöcken für unzuverlässigen Zugriff vorgesehen ist,
wenn der zweite ausgewählte der Vielzahl von Speicherblöcken für zuverlässigen Zugriff vorgesehen ist, Abrufen von sicheren, zum mindestens einen der Vielzahl von Clients gehörenden Zugangsdaten (146), um zu bestimmen, wann der mindestens eine der Vielzahl von Clients zuverlässig ist, und
Gestatten der zweiten Anfrage auf Zugriff auf den zweiten ausgewählten der Vielzahl von Speicherblöcken, wenn der mindestens eine der Vielzahl von virtuellen Clients zuverlässig ist.

12. Verfahren nach Anspruch 11, ferner umfassend:
Ablehnen der zweiten Anfrage auf Zugriff auf den zweiten ausgewählten der Vielzahl von Speicherblöcken, wenn der zweite ausgewählte der Vielzahl von Speicherblöcken für zuverlässigen Zugriff vorgesehen ist und der mindestens eine der Vielzahl von Clients unzuverlässig ist.

13. Verfahren nach einem der Ansprüche 9 bis 12, wobei das Speichermodul (140) einen Registerraum zur Speicherung einer Vielzahl von Registerdaten in einer Vielzahl von Registern umfasst, wobei ein erster Teilsatz der Vielzahl von Registern für zuverlässigen Zugriff vorgesehen ist und ein zweiter Teilsatz der Vielzahl von Registern für unzuverlässigen Zugriff vorgesehen ist, und wobei das Verfahren ferner Folgendes umfasst:
Empfangen (420) einer Anfrage auf Zugriff auf ein ausgewähltes der Vielzahl von Registern von mindestens einem der Vielzahl von virtuellen Clients,
Bestimmen eines von Folgenden: das ausgewählte der Vielzahl von Registern wird für zuverlässigen Zugriff vorgesehen und das ausgewählte der Vielzahl von Registern wird für unzuverlässigen Zugriff vorgesehen,
Gestatten (426) der Anfrage auf Zugriff auf das ausgewählte der Vielzahl von Registern, wenn das ausgewählte der Vielzahl von Registern für unzuverlässigen Zugriff vorgesehen ist,
wenn das ausgewählte der Vielzahl von Registern für zuverlässigen Zugriff vorgesehen ist, Abrufen von sicheren, zum mindestens einen der Vielzahl von virtuellen Clients gehörende Zugangsdaten (146), um zu bestimmen, wann der mindestens eine der Vielzahl von virtuellen Clients zuverlässig ist, und
Gestatten (426) der Anfrage auf Zugriff auf das ausgewählte der Vielzahl von Registern, wenn der mindestens eine der Vielzahl von virtuellen Clients zuverlässig ist.

14. Verfahren nach Anspruch 13, ferner umfassend:
Ablehnen (432) der Anfrage auf Zugriff auf das ausgewählte der Vielzahl von Registern, wenn das erste ausgewählte der Vielzahl von Registern für zuverlässigen Zugriff vorgesehen ist und der mindestens eine der Vielzahl von virtuellen Clients unzuverlässig ist.

15. Verfahren nach einem der Ansprüche 9 bis 14, ferner umfassend:
Empfangen eines Videosignals über mindestens einen der Vielzahl von Clients, und
Ausführen, über den mindestens einen Prozessor, einer Videoverarbeitungsanwendung, die das Videosignal durch mindestens eine der Folgenden verarbeitet:
eine Codierung des Videosignals,
eine Decodierung des Videosignals, und
eine Transcodierung des Videosignals.

## Revendications

1. Système de traitement comprenant :
un module de mémoire (140), ledit module de mémoire (140) comprenant une pluralité de blocs mémoire ; un premier sous-ensemble de la pluralité de blocs mémoire étant conçu pour l'accès de confiance et un second sous-ensemble de la pluralité de blocs mémoire étant conçu pour l'accès non de confiance, ladite pluralité de blocs mémoire stockant un système d'exploitation (190) comportant une pluralité de processus de système d'exploitation (192) et ledit module de mémoire (140) stockant en outre des données d'accès sécurisées (146) ;
une pluralité de clients, couplés au module de mémoire (140), comportant au moins un processeur qui exécute le système d'exploitation (190) par l'intermédiaire de la pluralité de processus de système d'exploitation (192), chacun de la pluralité des processus de système d'exploitation (192) étant conçu comme l'un correspondant d'une pluralité de clients virtuels ;
un module d'arbitrage de mémoire (155), couplé au module de mémoire (140) et à la pluralité de clients, ledit module d'arbitrage de mémoire (155) :
recevant (400) une première demande d'accès à l'un premier choisi de la pluralité de blocs mémoire en provenance d'au moins l'un de la pluralité de clients virtuels ;
déterminant que l'un parmi : ledit l'un premier choisi de la pluralité de blocs mémoire est conçu pour l'accès de confiance, et ledit l'un choisi de la pluralité de blocs mémoire est conçu pour l'accès non de confiance ;
donnant satisfaction (406) à la première demande d'accès audit l'un premier choisi de la pluralité de blocs mémoire lorsque ledit l'un premier choisi de la pluralité de blocs mémoire est conçu pour l'accès non de confiance ;
lorsque ledit l'un premier choisi de la pluralité de blocs mémoire est conçu pour l'accès de confiance, récupérant les données d'accès sécurisées (146) correspondant audit au moins l'un de la pluralité de clients virtuels pour déterminer lorsque ledit au moins l'un de la pluralité de clients virtuels est de confiance ; et
donnant satisfaction (406) à la première demande d'accès audit l'un premier choisi de la pluralité de blocs mémoire lorsque ledit au moins l'un de la pluralité de clients virtuels est de confiance.

2. Système de traitement selon la revendication 1, ledit module d'arbitrage de mémoire (155) en outre :
refusant de satisfaire (412) à la première demande d'accès audit l'un premier choisi de la pluralité de blocs mémoire lorsque ledit l'un premier choisi de la pluralité de blocs mémoire est conçu pour l'accès de confiance et ledit au moins l'un de la pluralité de clients virtuels n'est pas de confiance.

3. Système de traitement selon la revendication 1 ou 2, ledit module d'arbitrage de mémoire (155) :
recevant une seconde demande d'accès à l'un second choisi de la pluralité de blocs mémoire en provenance d'au moins l'un de la pluralité de clients ;
déterminant que l'un parmi : ledit l'un second choisi de la pluralité de blocs mémoire est conçu pour l'accès de confiance et ledit l'un second choisi de la pluralité de blocs mémoire est conçu pour l'accès non de confiance ;
donnant satisfaction à la seconde demande d'accès audit l'un second choisi de la pluralité de blocs mémoire lorsque ledit l'un second choisi de la pluralité de blocs mémoire est conçu pour l'accès non de confiance ;
lorsque ledit l'un second choisi de la pluralité de blocs mémoire est conçu pour l'accès de confiance, récupérant les données d'accès sécurisées (146) correspondant audit au moins l'un de la pluralité de clients pour déterminer lorsque ledit au moins l'un de la pluralité de clients virtuels est de confiance ; et
donnant satisfaction à la seconde demande d'accès audit l'un second choisi de la pluralité de blocs mémoire lorsque ledit au moins l'un de la pluralité de clients virtuels est de confiance.

4. Système de traitement selon la revendication 3, ledit module d'arbitrage de mémoire (155) en outre :
refusant de satisfaire à la seconde demande d'accès audit l'un second choisi de la pluralité de blocs mémoire lorsque ledit l'un second choisi de la pluralité de blocs mémoire est conçu pour l'accès de confiance et ledit au moins l'un de la pluralité de clients n'est pas de confiance.

5. Système de traitement selon l'une quelconque des revendications précédentes, ledit module de mémoire (140) comprenant un espace de répertoires (144) destiné au stockage d'une pluralité de données de répertoires dans une pluralité de répertoires, un premier sous-ensemble de la pluralité de répertoires étant conçu pour l'accès de confiance et un second sous-ensemble de la pluralité de registres étant conçu pour l'accès non de confiance, et ledit système d'exploitation comprenant en outre :
un module d'arbitrage de registre (150), couplé au module de mémoire (140) et à la pluralité de clients, ledit module d'arbitrage de registre :
recevant (420) une demande d'accès à l'un choisi de la pluralité de registres en provenance d'au moins l'un de la pluralité de clients virtuels ;
déterminant que l'un parmi : ledit l'un choisi de la pluralité de registres est conçu pour l'accès de confiance et ledit l'un choisi de la pluralité de registres est conçu pour l'accès non de confiance ;
donnant satisfaction (426) à le demande d'accès audit l'un choisi de la pluralité de registres lorsque ledit l'un choisi de la pluralité de registres est conçu pour l'accès non de confiance ;
lorsque ledit l'un choisi de la pluralité de registres est conçu pour l'accès de confiance, récupérant les données d'accès sécurisées (146) correspondant audit au moins l'un de la pluralité de clients virtuels pour déterminer lorsque ledit au moins l'un de la pluralité de clients virtuels est de confiance ; et
donnant satisfaction (426) à la demande d'accès audit l'un choisi de la pluralité de registres lorsque ledit au moins l'un de la pluralité de clients virtuels est de confiance.

6. Système de traitement selon la revendication 5, ledit module d'arbitrage de registre en outre :
refusant de satisfaire (432) à la demande d'accès audit l'un choisi de la pluralité de registres lorsque ledit l'un premier choisi de la pluralité de registres est conçu pour l'accès de confiance et ledit au moins l'un de la pluralité de clients virtuels n'est pas de confiance.

7. Système de traitement selon l'une quelconque des revendications précédentes, ledit au moins un processeur exécutant une application de traitement vidéo ;
ladite pluralité de clients comprenant au moins une unité d'interface qui reçoit un signal vidéo et délivre un signal vidéo traité généré par l'application de traitement vidéo sur la base d'au moins l'un parmi :
un codage du signal vidéo ;
un décodage du signal vidéo ; et
un transcodage du signal vidéo.

8. Système de traitement selon la revendication 7, ledit au moins un processeur comprenant au moins l'un parmi :
un moteur de codage, couplé à ladite au moins une unité d'interface, permettant le codage du signal vidéo ; et
un moteur de décodage, couplé à ladite au moins une unité d'interface, permettant le décodage du signal vidéo.

9. Procédé consistant à :
diviser (390) un module de mémoire (140) en une pluralité de blocs mémoire, un premier sous -ensemble de la pluralité de blocs mémoire étant conçu pour l'accès de confiance et un second sous-ensemble de la pluralité de blocs mémoire étant conçu pour l'accès non de confiance, ladite pluralité de blocs mémoire stockant un système d'exploitation (190) comportant une pluralité de processus de système d'exploitation (192) et ledit module de mémoire (140) stockant en outre les données d'accès sécurisées (146) ;
exécuter (392), par l'intermédiaire d'au moins un processeur, le système d'exploitation (190) par l'intermédiaire de la pluralité de processus de système d'exploitation (192), chacun de la pluralité de processus de système d'exploitation (192) étant conçu comme l'un correspondant d'une pluralité de clients virtuels ;
recevoir (400) une première demande d'accès à l'un premier choisi de la pluralité de blocs mémoire en provenance d'au moins l'un de la pluralité de clients virtuels ;
déterminer que l'un parmi : ledit l'un premier choisi de la pluralité de blocs mémoire est conçu pour l'accès de confiance et ledit l'un choisi de la pluralité de blocs mémoire est conçu pour l'accès non de confiance ;
donner satisfaction (406) à la première demande d'accès audit l'un premier choisi de la pluralité de blocs mémoire lorsque ledit l'un premier choisi de la pluralité de blocs mémoire est conçu pour l'accès non de confiance ;
lorsque ledit l'un premier choisi de la pluralité de blocs mémoire est conçu pour l'accès de confiance, récupérer les données d'accès sécurisées (146) correspondant audit au moins l'un de la pluralité de clients virtuels pour déterminer lorsque ledit au moins l'un de la pluralité de clients virtuels est de confiance ; et
donner satisfaction (406) à la première demande d'accès audit l'un premier choisi de la pluralité de blocs mémoire lorsque ledit au moins l'un de la pluralité de clients virtuels est de confiance.

10. Procédé selon la revendication 9, consistant en outre à :
refuser de satisfaire (412) à la première demande d'accès audit l'un premier choisi de la pluralité de blocs mémoire lorsque ledit l'un premier choisi de la pluralité de blocs mémoire est conçu pour l'accès de confiance et ledit au moins l'un de la pluralité de clients virtuels n'est pas de confiance.

11. Procédé selon la revendication 9 ou 10, consistant en outre à :
recevoir une seconde demande d'accès à l'un second choisi de la pluralité de blocs mémoire en provenance d'au moins l'un de la pluralité de clients ;
déterminer que l'un parmi : ledit l'un second choisi de la pluralité de blocs mémoire est conçu pour l'accès de confiance et ledit l'un second choisi de la pluralité de blocs mémoire est conçu pour l'accès non de confiance ;
donner satisfaction à la seconde demande d'accès audit l'un second choisi de la pluralité de blocs mémoire lorsque ledit l'un second choisi de la pluralité de blocs mémoire est conçu pour l'accès non de confiance ;
lorsque ledit l'un second choisi de la pluralité de blocs mémoire est conçu pour l'accès de confiance, récupérer les données d'accès sécurisées (146) correspondant audit au moins l'un de la pluralité de clients pour déterminer lorsque ledit au moins l'un de la pluralité de clients est de confiance ; et
donner satisfaction à la seconde demande d'accès audit l'un second choisi de la pluralité de blocs mémoire lorsque ledit au moins l'un de la pluralité de clients virtuels est de confiance.

12. Procédé selon la revendication 11, consistant en outre à :
refuser de satisfaire à la seconde demande d'accès audit l'un second choisi de la pluralité de blocs mémoire lorsque ledit l'un second choisi de la pluralité de blocs mémoire est conçu pour l'accès de confiance et ledit au moins l'un de la pluralité de clients n'est pas de confiance.

13. Procédé selon l'une quelconque des revendications 9 à 12, ledit module de mémoire (140) comprenant un espace de répertoires destiné au stockage d'une pluralité de données de répertoires dans une pluralité de répertoires, un premier sous-ensemble de la pluralité de répertoires étant conçu pour l'accès de confiance et un second sous-ensemble de la pluralité de registres étant conçu pour l'accès non de confiance, et ledit procédé consistant en outre à :
recevoir (420) une demande d'accès à l'un choisi de la pluralité de répertoires en provenance d'au moins l'un de la pluralité de clients virtuels ;
déterminer que l'un parmi : ledit l'un choisi de la pluralité de répertoires est conçu pour l'accès de confiance et ledit l'un choisi de la pluralité de registres est conçu pour l'accès non de confiance ;
donner satisfaction (426) à la demande d'accès audit l'un choisi de la pluralité de registres lorsque ledit l'un choisi de la pluralité de registres est conçu pour l'accès non de confiance ;
lorsque ledit l'un sélectionné de la pluralité de registres est conçu pour l'accès de confiance, récupérer les données d'accès sécurisées (146) correspondant audit au moins l'un de la pluralité de clients virtuels pour déterminer lorsque ledit au moins l'un de la pluralité de clients virtuels est de confiance ; et
donner satisfaction (426) à la demande d'accès audit l'un choisi de la pluralité de registres lorsque ledit au moins l'un de la pluralité de clients virtuels est de confiance.

14. Procédé selon la revendication 13, consistant en outre à :
refuser de satisfaire (432) à la demande d'accès audit l'un sélectionné de la pluralité de registres lorsque ledit l'un premier choisi de la pluralité de registres est conçu pour l'accès de confiance et ledit au moins l'un de la pluralité de clients virtuels n'est pas de confiance.

15. Procédé selon l'une quelconque des revendications 9 à 14 consistant en outre à :
recevoir un signal vidéo par l'intermédiaire d'au moins l'un de la pluralité de clients ; et
exécuter, par l'intermédiaire dudit au moins un processeur, une application de traitement vidéo qui traite le signal vidéo par au moins l'un parmi :
un codage du signal vidéo ;
un décodage du signal vidéo ; et
un transcodage du signal vidéo.
